(19) Europäisches Patentamt / European Patent Office / Office européen des brevets

(11) **EP 2 891 877 B1**

(12) **FASCICULE DE BREVET EUROPEEN**

(45) Date de publication et mention
de la délivrance du brevet:
**27.07.2016 Bulletin 2016/30**

(51) Int Cl.:
***G01N 21/3504*** *(2014.01)* ***G01N 21/03*** *(2006.01)*

(21) Numéro de dépôt: **14199930.0**

(22) Date de dépôt: **23.12.2014**

(54) **Capteur de gaz miniature**

Mini-Gassensor

Miniature gas sensor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.01.2014 FR 1450048**

(43) Date de publication de la demande:
**08.07.2015 Bulletin 2015/28**

(73) Titulaire: **Commissariat à l'Énergie Atomique
et aux Énergies Alternatives
75015 Paris (FR)**

(72) Inventeur: **Andre, Luc
38000 GRENOBLE (FR)**

(74) Mandataire: **Brevalex
56, Boulevard de l'Embouchure
B.P. 27519
31075 Toulouse Cedex 2 (FR)**

(56) Documents cités:
**WO-A1-2011/151629 FR-A1- 2 390 725
US-A- 5 459 566 US-A- 5 468 961**

• **AMORUSO A ET AL: "LONG-BASE-LINE
MULTIPLE REFLECTION CELL FOR UV AND
VISIBLE SPECTROSCOPY", REVIEW OF
SCIENTIFIC INSTRUMENTS, AIP, MELVILLE, NY,
US, vol. 66, no. 10, 1 octobre 1995 (1995-10-01),
pages 4824-4826, XP000546412, ISSN: 0034-6748,
DOI: 10.1063/1.1146158**

## Description

## DOMAINE TECHNIQUE

La présente invention concerne le domaine des capteurs de gaz, en particulier le domaine des capteurs de gaz mettant en oeuvre l'absorption d'un rayonnement infrarouge.

## ÉTAT DE LA TECHNIQUE ANTÉRIEURE

On connaît dans l'art antérieur des capteurs de gaz mettant en oeuvre la technique dite NDIR, pour « *Non Dispersive Infra Red* ». Selon cette technique, on émet un faisceau lumineux dans l'infrarouge (longueur d'onde comprise entre 1 $\mu$m et 10 $\mu$m), à l'intérieur d'une cavité recevant un gaz à détecter. Le faisceau lumineux est partiellement absorbé par ledit gaz. La longueur d'onde d'absorption dépend de la nature du gaz. On utilise généralement une source lumineuse émettant un faisceau lumineux à la longueur d'onde d'absorption du gaz à détecter. Alternativement, on utilise un filtre en longueur d'onde destiné à éliminer des contributions spectrales n'appartenant pas à une bande spectrale d'intérêt centrée sur la longueur d'onde d'absorption. Un détecteur permet de mesurer l'intensité lumineuse à la longueur d'onde d'absorption, après absorption partielle par ledit gaz. On peut ainsi détecter la présence d'un gaz déterminé, et même sa concentration dans la cavité en utilisant la loi de Beer-Lambert. On rappelle que pour un gaz prédéterminé et présentant une longueur d'onde d'absorption, la loi de Beer-Lambert relie :

- l'intensité lumineuse à la longueur d'onde d'absorption avant absorption partielle par ledit gaz ($I_0$) ;
- l'intensité lumineuse à la longueur d'onde d'absorption après absorption partielle par ledit gaz ($I$) ;
- la longueur du chemin optique parcouru dans le milieu gazeux ($\ell_g$) ;
- la concentration en gaz dans le milieu ($C$) ; et
- l'absorptivité molaire dudit gaz ($\varepsilon$) :

$$I = I_0 * e^{-\varepsilon l_g C}$$

Dans ces capteurs de gaz connus, la source lumineuse peut être une diode électroluminescente, émettant un faisceau centré sur la longueur d'onde d'absorption désirée. On peut également utiliser un filament agissant comme un corps noir. Dans ce cas, on utilise avantageusement un filtre tel que défini ci-avant, ainsi qu'une optique de collimation.

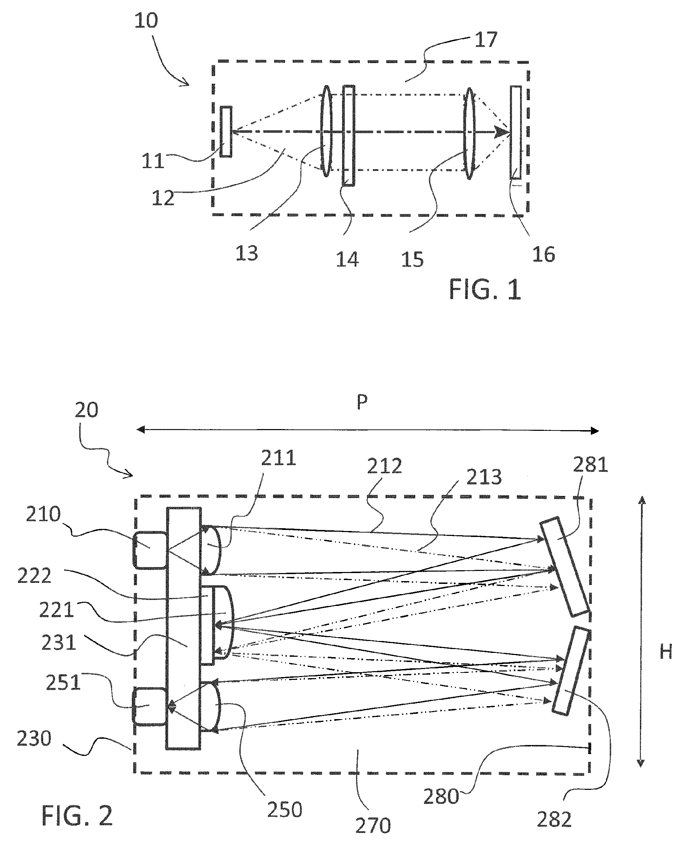

On a représenté en figure 1 un exemple de capteur de gaz 10 selon l'art antérieur. La source lumineuse 11 est formée par un filament, et émet un faisceau lumineux 12 en direction d'une optique de collimation 13. Un filtre 14 élimine les contributions spectrales du faisceau lumineux 12 se trouvant à l'extérieur d'une bande spectrale utile associée au gaz à détecter. A proximité du détecteur 16 se trouve une optique de focalisation 15, adaptée à focaliser le faisceau lumineux sur ledit détecteur. Le détecteur 16 permet de traduire en un signal électrique, l'intensité lumineuse du faisceau lumineux incident. Le tout est situé à l'intérieur d'une cavité 17 recevant ledit gaz à détecter.

Pour un gaz donné, on peut définir une longueur minimale du chemin optique parcouru par le faisceau lumineux dans la cavité, permettant d'obtenir une mesure de la concentration en gaz suffisamment précise.

On connaît dans l'art antérieur différentes solutions pour réaliser un capteur de gaz miniaturisé.

Par exemple, le document de brevet US 2003/0136911 propose d'utiliser une cavité dont les parois sont formées par deux surfaces planes parallèles reliées par une surface latérale orthogonale aux deux surfaces planes parallèles. Les surfaces planes parallèles ont une forme d'ellipse tronquée. Deux droites partent des extrémités tronquées de l'ellipse et convergent vers le détecteur. La source lumineuse est placée en un premier foyer de l'ellipse, tandis que le détecteur est placé au second foyer de l'ellipse. Les rayons lumineux émis par la source lumineuse sont réfléchis au moins une fois sur la surface latérale de la cavité, avant d'atteindre le détecteur. Ils parcourent ainsi un chemin optique supérieur à la distance séparant la source lumineuse et le détecteur.

Un inconvénient d'une telle cavité est qu'elle doit être alignée très précisément relativement à la source lumineuse et au détecteur.

En outre, elle offre des possibilités de miniaturisation relativement restreintes car la plupart des rayons lumineux n'effectuent qu'une seule réflexion sur la surface latérale avant d'atteindre le détecteur.

Le document WO 2011/151629 divulgue un capteur de gaz comprenant des lentilles et des surfaces réfléchissantes concaves agencées de sorte qu'un faisceau lumineux émis par une source se propage par réflexions successives vers un détecteur.

Un objectif de la présente invention est de proposer un capteur de gaz présentant une compacité plus élevée que les capteurs de gaz de l'art antérieur, pour une même longueur de chemin optique parcourue par un faisceau lumineux à l'intérieur de la cavité recevant le gaz à étudier.

## EXPOSÉ DE L'INVENTION

Cet objectif est atteint avec un capteur de gaz comprenant une cavité pour recevoir un gaz, une source lumineuse et un détecteur.

Le capteur de gaz selon l'invention comprend :

- un substrat;
- un objectif situé sur le substrat, adapté à collecter un faisceau lumineux émis par la source lumineuse ;

# EP 2 891 877 B1

- un oculaire situé sur le substrat, adapté à collecter un faisceau lumineux incident pour le focaliser sur le détecteur ;
- des surfaces réfléchissantes dites de retour, situées en face dudit substrat ; et
- au moins une lentille de relais, disposée sur une surface réfléchissante dite intermédiaire formée sur le substrat, et comprenant au moins une lentille de champ adaptée à dévier des rayons du faisceau lumineux émis par la source lumineuse, pour les rapprocher de l'axe optique de l'oculaire.

Selon l'invention, l'objectif, l'oculaire, la lentille de relais, la surface réfléchissante intermédiaire, et les surfaces réfléchissantes de retour forment ensemble un système optique agencé de sorte que le faisceau lumineux émis par la source lumineuse se propage par réflexions successives de l'objectif à l'oculaire en passant par la lentille de relais.

Le substrat est avantageusement un substrat en matériau semi-conducteur transparent à une longueur d'onde d'émission de la source lumineuse.

En variante, le substrat est en métal.

De préférence, la source lumineuse et le détecteur sont disposés sur une première face du substrat, opposée à une seconde face du substrat sur laquelle sont disposés l'objectif, l'oculaire, et la lentille de relais.

La lentille de champ peut être une lentille plan concave, une face plane de la lentille de champ étant disposée sur la surface réfléchissante intermédiaire et en un foyer intermédiaire du système optique.

La lentille de relais comprend de préférence au moins une lentille intermédiaire intercalée entre deux lentilles de champ, de sorte que le faisceau lumineux émis par la source lumineuse se propage par réflexions successives de l'objectif à l'oculaire en passant par les lentilles de champ et la lentille intermédiaire.

Au moins un élément optique parmi la lentille de relais, l'objectif, et l'oculaire, peut être en polyéthylène haute densité.

Au moins un élément optique parmi la lentille de relais, l'objectif, et l'oculaire, peut être constitué d'une lentille sub-longueur d'onde.

De préférence, le capteur de gaz selon l'invention est tel que :

- la source lumineuse comprend une pluralité de sources élémentaires;
- l'objectif comprend une pluralité d'objectifs élémentaires, adaptés chacun à collecter un faisceau lumineux émis par une source élémentaire ;
- l'oculaire comprend une pluralité d'oculaires élémentaires adaptés chacun à collecter un faisceau lumineux incident pour le focaliser sur le détecteur; et
- la lentille de relais comprend une pluralité de lentilles de relais élémentaires.

La source lumineuse peut comprendre une pluralité de sources élémentaires alignées sur une même droite.

En variante, la source lumineuse peut comprendre une pluralité de sources élémentaires réparties de part et d'autre du détecteur et alignées selon deux droites parallèles.

Selon une autre variante, la source lumineuse comprend une pluralité de sources élémentaires réparties sur un cercle centré sur le détecteur.

Au moins une des surfaces réfléchissantes de retour est avantageusement inclinée relativement au plan du détecteur, de sorte que des faisceaux lumineux émis par les sources élémentaires soient focalisés en un même point sur le détecteur.

Le capteur de gaz selon l'invention peut comprendre un pré-concentrateur de gaz disposé sur une surface réfléchissante de retour.

Le capteur de gaz selon l'invention comprend avantageusement un capot recevant la surface réfléchissante de retour et le pré-concentrateur de gaz, le capot étant réalisé amovible relativement au substrat.

De préférence, la source lumineuse est réalisée selon la technologie MEMS. Il s'agit par exemple d'une source infrarouge micro-électronique, comportant une membrane résistive formant un émetteur thermique.

Le détecteur est avantageusement réalisé selon la technologie MEMS. Il s'agit par exemple d'un bolomètre micro-électronique, comportant une membrane absorbante formant un absorbant thermique.

L'invention concerne également un éthylomètre comprenant un capteur de gaz selon l'invention, adapté à recevoir un gaz expiré par un utilisateur.

BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1 illustre de manière schématique un capteur de gaz selon l'art antérieur ;
- la figure 2 illustre un premier mode de réalisation d'un capteur de gaz selon l'invention ;
- la figure 3A illustre de manière schématique, un deuxième mode de réalisation d'un capteur de gaz selon l'invention ;
- la figure 3B illustre de manière schématique l'équivalent « déplié » du capteur de gaz de la figure 3A ;
- les figures 4A à 4D illustrent de manière schématique plusieurs variantes d'un troisième mode de réalisation d'un capteur de gaz selon l'invention ;
- la figure 5 illustre un quatrième mode de réalisation d'un capteur de gaz selon l'invention ;
- la figure 6 illustre un sixième mode de réalisation de capteur de gaz selon l'invention ;
- la figure 7 illustre un réseau pouvant être une lentille sub-longueur d'onde utilisée dans un capteur de gaz selon l'invention ; et

- les figures 8A et 8B illustrent une vue de détail d'un capteur de gaz selon l'invention dans lequel au moins une optique réfractive est formée par une lentille sub-longueur d'onde.

## EXPOSÉ DÉTAILLÉ DE MODES DE RÉALISATION PARTICULIERS

On va tout d'abord décrire, en référence à la figure 2, un premier mode de réalisation d'un capteur de gaz 20 selon l'invention.

Le capteur de gaz 20 selon l'invention comprend une cavité 270, pour recevoir un gaz prédéterminé. Ce gaz peut être du dioxyde de carbone, du monoxyde de carbone, un gaz à usage domestique tel que le méthane, l'éthane, le propane, le butane, l'ammoniac. Le capteur de gaz peut également être utilisé pour la mesure de l'éthanol, dans un éthylomètre.

Une source lumineuse 210 émet un faisceau lumineux dans l'infrarouge. Un détecteur 251 reçoit ce faisceau lumineux après un trajet dans la cavité 270 au cours duquel le faisceau lumineux est partiellement absorbé par le gaz présent à l'intérieur de la cavité 270.

La cavité comprend deux faces intérieures opposées 230 et 280. La cavité présente typiquement une forme de cylindre ou de parallélépipède rectangle, dont les faces 230 et 280 forment les deux bases.

Du côté de la face intérieure 230 se trouve un substrat 231, par exemple en matériau semi-conducteur. Le substrat 231 est par exemple issu d'un wafer en silicium présentant une épaisseur de 725 $\mu$m. Il est transparent à la longueur d'onde d'absorption du gaz à détecter.

Sur ce substrat 231 sont disposés les éléments optiques suivants (il s'agit d'optiques réfractives) :

- un objectif 211, adapté à collecter un faisceau lumineux émis par la source lumineuse 210 ;
- un oculaire 250, adapté à focaliser un faisceau incident sur le détecteur 251 ; et
- une lentille de relais 221.

La source lumineuse 210 et le détecteur 251 sont situés du côté du substrat opposé aux optiques réfractives.

La lentille de relais est disposée sur une surface réfléchissante intermédiaire 222. Cette surface réfléchissante intermédiaire est située avantageusement entre le substrat 231 et la lentille de relais 221.

Du côté de la face intérieure 280 se trouvent des surfaces réfléchissantes de retour 281, 282. Il s'agit par exemple de miroirs plans.

Ainsi, un faisceau lumineux :

- est émis par la source lumineuse 210 ;
- traverse l'objectif 211 ;
- traverse la cavité 270 une première fois ;

- est réfléchi sur la surface réfléchissante de retour 281;
- traverse la cavité 270 une deuxième fois;
- traverse la lentille de relais 221 ;
- est réfléchi sur la surface réfléchissante intermédiaire 222 ;
- traverse une seconde fois la lentille de relais 221;
- traverse la cavité 270 une troisième fois ;
- est réfléchi sur la surface réfléchissante de retour 282 ;
- traverse la cavité 270 une quatrième fois ;
- traverse l'oculaire 250 qui le focalise sur le détecteur 251.

En d'autres termes, l'objectif 211, les surfaces réfléchissantes de retour 281, 282, la lentille de relais 221, la surface réfléchissante intermédiaire 222 et l'oculaire 250 forment ensemble un système optique agencé pour que le faisceau lumineux émis par la source lumineuse se propage par réflexions successives de l'objectif 211 à l'oculaire 250 en passant par la lentille de relais 221.

L'objectif 211, la lentille de relais 221 et l'oculaire 250 forment ensemble un endoscope à lentilles, replié grâce aux surfaces réfléchissantes de retour et intermédiaire. Dans l'exemple de la figure 1, la lentille de relais est une lentille convergente plan-concave traversée deux fois : elle est donc équivalente à une lentille biconcave. La surface réfléchissante intermédiaire 222 est située du côté plan de la lentille de relais 221.

La lentille de relais 221 est plus particulièrement une lentille de champ. Elle est située en un foyer intermédiaire du système optique tel que défini ci-dessus. En particulier, la face plane de la lentille de relais est située en un foyer intermédiaire dudit système optique. Cette configuration est donc équivalente à une lentille de champ dans un endoscope à lentille, au centre de laquelle est situé un foyer intermédiaire de l'endoscope. La lentille de champ 221 permet de ramener vers l'axe optique de l'oculaire des rayons lumineux situés en bord de champ. On a représenté sur la figure 2 un faisceau 212 centré sur l'axe optique de l'oculaire (confondu avec l'axe optique de l'objectif et la lentille de relais), et un faisceau 213 s'éloignant de cet axe optique. Le faisceau 212 est représenté en trait plein, tandis que le faisceau 213 est représenté en trait mixte. Le faisceau 212 est focalisé sur la face plane de la lentille de champ 221, au centre de cette face. Le faisceau 213 est focalisé en périphérie de cette face plane. Après traversée de cette lentille de champ, le faisceau 212 n'est pas dévié de l'axe optique de l'oculaire, car il passe par le centre de la lentille biconcave équivalente à la lentille de champ. Le faisceau 213, au contraire, est dévié en direction de l'axe optique de l'oculaire, de sorte que les faisceaux 212 et 213 soient focalisés par l'oculaire 250 en un même point du détecteur 251. La lentille de champ permet que la largeur totale du faisceau lumineux se propageant depuis la source lumineuse jusqu'au détecteur reste limitée. On peut ainsi utiliser des optiques réfractives, en particulier un oculaire, qui présentent un diamètre réduit.

On voit donc que l'on peut réaliser ainsi un capteur de gaz présentant des dimensions réduites tout en offrant une grande longueur de chemin optique à l'intérieur de la cavité.

Le capteur de champ présente une profondeur P réduite, grâce aux surfaces réfléchissantes de retour et intermédiaire qui replient le chemin optique du faisceau lumineux émis par la source lumineuse 210. Le capteur de gaz présente une hauteur H réduite, grâce à la lentille de champ 221 qui limite l'élargissement spatial du faisceau lumineux au cours de sa propagation. De même, la largeur (non représentée) du capteur de champ reste limitée grâce à la lentille de champ 221 qui limite l'élargissement spatial du faisceau lumineux au cours de sa propagation.

En outre, les contraintes d'alignement sont moins sévères que si la source lumineuse et le détecteur devaient être placés aux foyers d'une ellipse.

On remarque en outre que l'ensemble des optiques réfractives (objectif, oculaire, lentille de relais) sont réalisées sur une même surface, en particulier sur un même substrat. La source et le détecteur sont situés du côté de ce substrat opposé aux optiques réfractives. La réalisation d'un capteur de gaz selon l'invention est donc simplifiée puisque l'ensemble des éléments utiles du capteur est situé sur le substrat. On peut même envisager de réaliser plusieurs capteurs de gaz selon l'invention à partir d'une même plaque de substrat, puis de découper la plaque après fixation des sources, détecteurs et optiques réfractives.

Les longueurs focales de l'objectif, l'oculaire et la lentille de relais, ainsi que les distances entre ces optiques réfractives seront choisies par l'homme du métier en fonction de dimensions souhaitées du capteur de gaz. On peut par exemple adapter des systèmes optiques connus formant un endoscope à lentilles. Pour cela, on intercale des miroirs entre les lentilles de l'endoscope, et on ajuste les caractéristiques des lentilles pour prendre en compte la double traversée de la lentille de relais dans un capteur de gaz selon l'invention. Par exemple, une lentille de relais biconcave de rayon R1-R1 appartenant à un endoscope à lentilles sera équivalente, dans le système optique selon l'invention, à une lentille plan-concave de rayon R1.

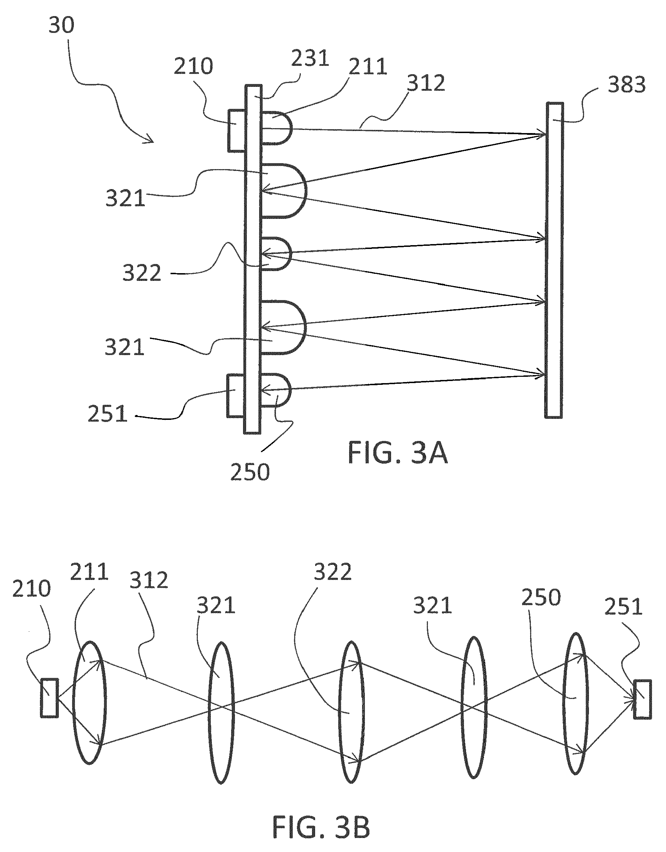

Sur le même modèle que les endoscopes à lentilles, on pourra prévoir autant de lentilles de relais que nécessaire, notamment en fonction d'une profondeur P souhaitée de la cavité 270 et d'une longueur de chemin optique souhaitée pour le faisceau lumineux se propageant depuis la source lumineuse 210 jusqu'au détecteur 251. Comme illustré en référence aux figures 3A et 3B, toutes les lentilles intermédiaires ne sont pas des lentilles de champ.

Par exemple, on souhaite obtenir une longueur de chemin optique de 8 cm, pour mesurer une concentration en dioxyde de carbone. On souhaite obtenir une profondeur P de la cavité égale à 1 cm, soit quatre allers et retours à l'intérieur de la cavité.

On a représenté sur la figure 3A et de manière schématique, un deuxième mode de réalisation d'un capteur de gaz 30 selon l'invention. Dans ce mode de réalisation du capteur de gaz 30 selon l'invention, le faisceau lumineux 312 effectue quatre allers et retours à l'intérieur de la cavité, entre le substrat 231 et une face 383 recevant des surfaces réfléchissantes de retour.

Le faisceau lumineux 312 traverse successivement l'objectif 211, une première lentille de relais 321 formée par une lentille de champ telle que décrite ci-avant, une deuxième lentille de relais 322, une troisième lentille de relais 321 formée par une lentille de champ, et l'oculaire 250. Toutes les lentilles de relais sont situées sur une surface réfléchissante intermédiaire (non représentée).

La deuxième lentille de relais 322 est une lentille intermédiaire, intercalée entre deux lentilles de champ.

On a représenté en figure 3B l'équivalent « déplié » du système optique de la figure 3A. On reconnaît bien que les lentilles de champ 321 sont situées chacune en un foyer intermédiaire du système optique. Entre ces deux lentilles de champ se trouve la lentille intermédiaire 322 qui contribue à positionner les foyers intermédiaires sur les lentilles de champ.

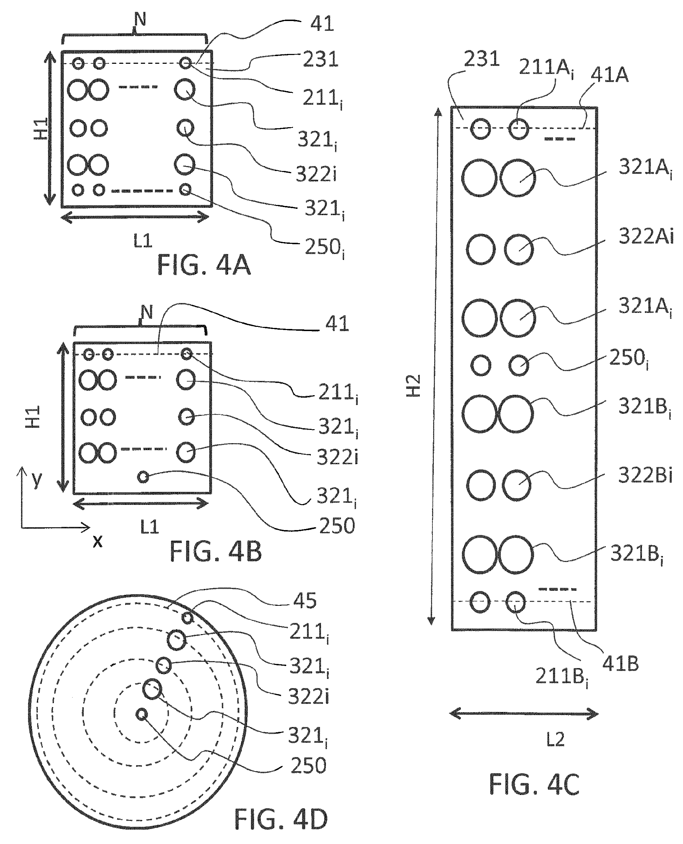

Les figures 4A à 4D illustrent de manière schématique plusieurs variantes d'un troisième mode de réalisation d'un capteur de gaz selon l'invention. Les figures 4A à 4D correspondent à des vues de face du substrat 231 recevant les optiques réfractives.

Les figures 4A à 4D correspondent à un capteur de gaz comprenant un objectif, une première lentille de champ, une lentille intermédiaire, une deuxième lentille de champ, et un oculaire.

Dans le troisième mode de réalisation de capteur de gaz selon l'invention, la source lumineuse est réalisée à l'aide de technologies issues de la micro-électronique. Une telle source lumineuse offre généralement une puissance optique réduite, c'est pourquoi on utilise avantageusement une pluralité de sources élémentaires pour former la source lumineuse du capteur de gaz. Les sources élémentaires sont situées dans un même plan. En augmentant ainsi la surface d'émission d'un faisceau lumineux, on obtient une puissance optique souhaitée.

Dans une première variante du troisième mode de réalisation d'un capteur de gaz selon l'invention, l'objectif, l'oculaire, et les lentilles de relais (lentilles de champ et lentille intermédiaire) sont également décomposés en lentilles élémentaires. On réalise ainsi une pluralité de systèmes optiques élémentaires associés chacun à une source élémentaire. Cette première variante est illustrée en figure 4A. La source lumineuse (non représentée) est constituée d'une pluralité de sources élémentaires alignées selon une même droite 41. Chaque système optique élémentaire comprend un objectif élémentaire $211_i$, une première lentille de champ élémentaire $321_i$, une lentille intermédiaire élémentaire $322_i$, une

deuxième lentille de champ élémentaire $321_i$ et un oculaire élémentaire $250_i$. On compte N systèmes optiques élémentaires répartis sur un substrat 231 de hauteur H1 et de largeur L1. Par exemple, le substrat présente une hauteur H1 de 12 mm, une largeur L1 de 12 mm, et reçoit 10 systèmes optiques élémentaires. Le détecteur peut présenter une forme de barrette.

La figure 4B illustre une deuxième variante du troisième mode de réalisation d'un capteur de gaz selon l'invention. La figure 4B ne sera décrite que pour ses différences relativement à la figure 4A. Le plan du substrat 231 est défini par les axes orthogonaux x et y. Sur la figure 4B, les systèmes optiques élémentaires se partagent un unique oculaire 250. Une telle caractéristique est rendue possible par l'inclinaison des surfaces réfléchissantes de retour (non représentées sur les figures 4A à 4D). En particulier, un faisceau lumineux élémentaire émis par une source élémentaire est réfléchi, entre la deuxième lentille de champ $321_i$ et l'oculaire 250, sur une surface réfléchissante dédiée. Pour chaque faisceau lumineux élémentaire (excepté un éventuel faisceau lumineux élémentaire naturellement dirigé sur l'oculaire 250), ladite surface réfléchissante dédiée est inclinée autour de l'axe y de façon à dévier le faisceau lumineux élémentaire selon l'axe x, en direction de l'oculaire 250. On pourra remarquer que ladite surface réfléchissante dédiée peut également être inclinée autour de l'axe x, afin de dévier le faisceau lumineux élémentaire selon l'axe y, en direction de l'oculaire 250.

On voit que les différents faisceaux élémentaires émis par chacune des sources élémentaires parcourent des chemins optiques différents. On pourra prévoir de prendre en compte ce facteur pour le calcul de la concentration en gaz. Par exemple, on pourra déterminer une longueur moyenne de chemin optique.

L'homme du métier saura aisément prévoir d'autres variantes selon ce modèle, sans sortir du cadre de la présente invention. Par exemple, on pourra prévoir de dévier progressivement les faisceaux lumineux vers un unique oculaire, au fur et à mesure de leur propagation. Pour cela, on utilisera également une inclinaison autour de l'axe y, de surfaces réfléchissantes de retour. Le nombre de lentilles de relais élémentaires pourra ainsi être décroissant, considérées dans l'ordre selon lequel elles sont traversées par les faisceaux lumineux élémentaires. On pourra également envisager de focaliser les faisceaux lumineux élémentaires sur plusieurs oculaires, moins nombreux que les sources élémentaires.

Un avantage de ces variantes est qu'elles permettent d'utiliser un détecteur de surface réduite, présentant donc un bon rapport signal sur bruit.

La figure 4C illustre une troisième variante du troisième mode de réalisation d'un capteur de gaz selon l'invention. La figure 4C ne sera décrite que pour ses différences relativement à la figure 4A. Dans le mode de réalisation de la figure 4C, les sources élémentaires sont alignées selon deux droites. Un premier groupe d'objectifs élémentaires $211A_i$ est aligné selon une droite 41A.

Un second groupe d'objectifs élémentaires $211B_i$ est aligné selon une droite 41B. Les droites 41A et 41B sont parallèles entre elles et situées de part et d'autre du détecteur situé à hauteur d'une rangée d'oculaires élémentaires $250_i$. D'un côté de cette rangée d'oculaires élémentaires $250_i$ se trouvent des rangées successives de premières lentilles de champ élémentaires $321A_i$, de lentilles intermédiaires élémentaires $322A_i$, et de deuxièmes lentilles de champ élémentaires $321A_i$. On retrouve la configuration de la figure 4A. De l'autre côté de la rangée d'oculaires élémentaires $250_i$ se trouvent d'autres rangées successives de premières lentilles de champ élémentaires $321B_i$, de lentilles intermédiaires élémentaires $322B_i$, et de deuxièmes lentilles de champ élémentaires $321B_i$. On voit donc que pour un même nombre de sources élémentaires, cette variante permet de répartir l'encombrement des optiques réfractives sur le substrat dans le sens de sa hauteur H2, et non uniquement dans le sens de sa largeur L2.

La figure 4D illustre une quatrième variante correspondant à des sources élémentaires réparties selon un cercle 45 centré sur un détecteur point. Les objectifs élémentaires $211_i$, et lentilles de relais élémentaires $321_i$, $322_i$ sont répartis en cercles concentriques autour d'un unique oculaire 250. On peut ainsi utiliser un détecteur de surface réduite, présentant un bon rapport signal sur bruit.

On pourra envisager de nombreuses variantes supplémentaires de répartition des sources élémentaires relativement au détecteur, sans sortir du cadre de la présente invention. Par exemple, la répartition des éléments optiques sur le substrat sera fonction de la répartition des sources élémentaires relativement au détecteur.

On pourra également envisager de nombreuses variantes mettant en oeuvre une source lumineuse ou une pluralité de sources lumineuses élémentaires, et un détecteur ou une pluralité de détecteurs élémentaires, sans sortir du cadre de la présente invention.

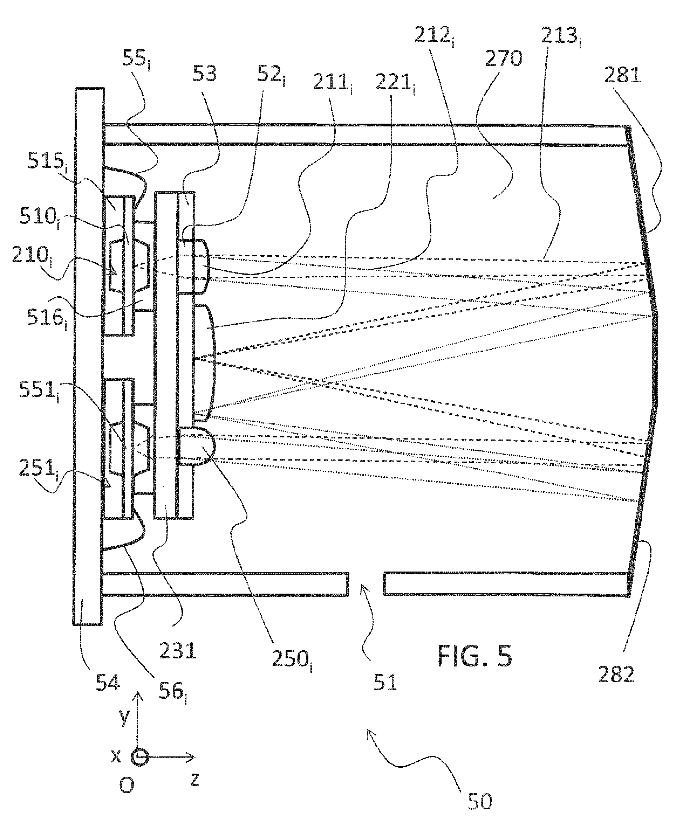

La figure 5 illustre un quatrième mode de réalisation de capteur de gaz 50 selon l'invention. La figure 5 ne sera décrite que pour ses différences relativement à la figure 2.

On a représenté sur la figure 5 une ouverture 51, pour l'entrée du gaz à détecter à l'intérieur de la cavité 270. Cette ouverture présente ici une forme de disque de diamètre 1 cm. En variante, le gaz entre par une pluralité d'ouvertures plus petites, ou par au moins deux ouvertures situées face à face, de part et d'autre de la cavité 270.

La source lumineuse est constituée d'une pluralité de sources lumineuses élémentaires $210_i$ chacune associée à un objectif élémentaire $211_i$, une lentille de relais élémentaire $221_i$ et un oculaire élémentaire $250_i$. De façon similaire au mode de réalisation de la figure 4A, les sources lumineuses élémentaires sont alignées entre elles. Le capteur de gaz 50 est représenté selon une vue en coupe dans le plan (yOz), orthogonal à une droite selon laquelle sont alignées les sources lumineuses élémentaires. On a représenté sur la figure 5 les faisceaux élémentaires $212_i$ et $213_i$ correspondant respectivement aux faisceaux 212 et 213 de la figure 2.

Le miroir 281 est un miroir plan incliné d'un angle de -3,5° autour de l'axe x (axe orthogonal au plan (yOx)). Le miroir 282 est un miroir plan incliné d'un angle de +3,5° autour de l'axe x. Dans une variante dans laquelle le capteur de gaz comporterait plus d'une lentille de relais, par exemple trois, on pourra prévoir que les autres surfaces réfléchissantes de retour soient planes et parallèles au plan (xOy). On pourra prévoir des miroirs plans distincts pour chaque système optique élémentaire.

Entre la source élémentaire $210_i$ et l'objectif $211_i$ se trouve un filtre optique élémentaire $52_i$ tel que présenté ci-avant, destiné à sélectionner une plage de longueurs d'onde utiles pour une mesure de concentration d'un gaz prédéterminé.

Dans l'exemple représenté en figure 5, le filtre optique élémentaire 52j est réalisé sur le substrat 231. Sur la figure 5, le filtre optique élémentaire $52_i$ est superposé à l'objectif élémentaire $211_i$. En variante, il peut être superposé à l'oculaire élémentaire $250_i$ ou superposé à la lentille de relais élémentaire $221_i$, ou une combinaison de ces plusieurs possibilités. On fonctionnalise ainsi au maximum le substrat 231, ce qui facilite la fabrication du capteur de gaz selon l'invention. La fonction de transfert du filtre (passe haut, passe bas, passe bande) sera différente en fonction de son positionnement.

Le substrat 231 est recouvert d'une couche de matériau réfléchissant 53, excepté au regard des sources lumineuses élémentaires $210_i$ et des détecteurs élémentaires $251_i$. Cette couche de matériau réfléchissant 53 forme une surface réfléchissante intermédiaire telle que définie en référence à la figure 2. Elle permet également d'empêcher l'arrivée de lumière parasite sur le détecteur.

On va maintenant décrire les principales étapes de réalisation d'un capteur de gaz tel que représenté en figure 5.

Le substrat 231 par exemple en matériau semi-conducteur est issu d'un wafer en silicium, d'épaisseur 725 μm. Il est donc transparent aux longueurs d'onde d'intérêt.

Sur ce substrat, on dépose une couche de matériau réfléchissant, par exemple un métal tel que l'or ou l'aluminium. On pourra également envisager d'autres matériaux tels que l'argent ou le cuivre.

On grave des trous d'environ 1 mm de diamètre dans la couche de matériau réfléchissant, de façon à ajourer la couche de matériau réfléchissant 53 au regard des sources lumineuses élémentaires $210_i$ et des détecteurs élémentaires $251_i$. Cette gravure est réalisée de préférence suite à une étape de photolithographie qui permet de définir les zones où réaliser l'ouverture du matériau réfléchissant. La gravure à proprement parler pourra être humide ou sèche en fonction du matériau. La photolithographie comprend par exemple des étapes de dépôt d'une résine photosensible, superposition d'un masque et gravure de la résine à l'aide d'une exposition à un rayonnement ultraviolet. La gravure proprement dite est par exemple une attaque chimique de la couche 53 au travers de la résine gravée.

On obtient un substrat 231 recouvert d'une couche de matériau réfléchissant 53 ajourée.

En variante, le substrat 231 est un matériau non transparent aux longueurs d'onde d'intérêt, et ajouré au regard de la source lumineuse et du détecteur. Il s'agit par exemple d'un métal. Ce métal peut être réfléchissant, de sorte que la surface réfléchissante intermédiaire recevant la lentille de relais selon l'invention est formée par une face du substrat.

Sur la couche de matériau réfléchissant 53 ajourée, on réalise un dépôt destiné à former les filtres optiques élémentaires $52_i$. Le filtre optique élémentaire $52_i$ peut être formé d'un empilement multicouche métal-diélectrique ou d'un empilement multicouche diélectrique haut indice-bas indice. Par exemple, on forme un filtre optique élémentaire $52_i$ par un empilement métal-diélectrique de 5 couches, ou par un empilement diélectrique haut indice-bas indice de 12 couches. Le dépôt est ensuite gravé. Il n'est conservé que dans les ouvertures de la couche en matériau réfléchissant 53 destinées à être placées au regard d'une source élémentaire. En variante, il n'est conservé que dans les ouvertures de la couche en matériau réfléchissant 53 destinées à être placées au regard d'un détecteur élémentaire ou d'une lentille de relais élémentaire, ou dans plusieurs de ces types d'ouverture (voir ci-dessus).

On réalise ensuite les objectifs élémentaires $211_i$, lentilles de relais élémentaires $221_i$ et oculaires élémentaires $250_i$.

Avantageusement, ces différentes optiques réfractives sont réalisées de la façon suivante :

- on grave un moule en nickel nommé « master », selon la forme complémentaire d'une forme souhaitée pour une optique ;
- on coule un matériau utile dans le moule. Le matériau utile est par exemple du PEHD (polyéthylène haute densité). Il s'agira en tout état de cause d'un matériau suffisamment transparent dans la gamme spectrale visée, et que l'on peut imprimer. Sa température de transition vitreuse Tg devra être telle qu'en le chauffant, on pourra le ramollir suffisamment pour ensuite pouvoir lui donner la forme souhaitée. ;
- on chauffe le matériau utile tel que du PEHD, de sorte qu'il se ramollisse et qu'il prenne la forme du moule ;
- après que le matériau utile a refroidi, on place le moule à l'endroit souhaité, contre la couche en matériau réfléchissant 53, ou contre un filtre optique élémentaire. Le matériau utile adhère à la couche en matériau réfléchissant 53 ou au filtre optique élémentaire, et forme un objectif élémentaire $211_i$, une lentille de relais élémentaire $221_i$ ou un oculaire élé-

mentaire $250_i$.

Avantageusement, l'ensemble des objectifs élémentaires $211_i$, lentilles de relais élémentaires $221_i$ et oculaires élémentaires $250_i$ est réalisé en même temps, à l'aide d'une unique plaque de nickel. Ainsi, les différentes optiques réfractives sont réalisées en même temps, selon un procédé de fabrication collectif.

Un avantage de l'invention est donc que la fabrication peut être réalisée à bas coût et à grand échelle.

Par exemple, l'objectif élémentaire $211_i$ est une lentille asphérique de diamètre 700 $\mu$m et de hauteur 200 $\mu$m, et l'oculaire élémentaire $250_i$ est une lentille asphérique de diamètre 2 mm. La lentille de relais présente un diamètre au plus égal à 2 mm. La forme asphérique des optiques permet de conserver un faisceau lumineux dense. L'objectif et l'oculaire doivent être des optiques très ouvertes, pour collecter un maximum de flux lumineux.

Chaque source élémentaire $210_i$ est avantageusement une source élémentaire infrarouge basée sur une technologie de type micro-électromécanique (ou MEMS, pour l'anglais « *Microelectromechanical system »).* La source élémentaire $210_i$ comprend une membrane résistive $510_i$ formant un émetteur thermique. Cette membrane est dite résistive, car elle est parcourue par des pistes métalliques, disposées selon des cercles concentriques. En fournissant un courant à la membrane résistive $510_i$, celle-ci s'échauffe et forme une source de rayonnement infrarouge. La membrane résistive $510_i$ est suspendue au-dessus d'un creuset $515_i$ en silicium, et protégée par un chapeau $516_i$ transparent aux longueurs d'onde infrarouges. Le chapeau peut être formé par un échantillon de substrat en silicium d'épaisseur 725 $\mu$m, présentant un creux de 300 $\mu$m de profondeur. La cavité réalisée entre le creuset $515_i$ et le chapeau $516_i$ peut présenter des conditions de pression particulières. Par exemple, on réalise un vide partiel entre le creuset $515_i$ et le chapeau $516_i$. La membrane résistive $510_i$ est par exemple une membrane de nitrure de silicium ($Si_3N_4$) de 100 nm d'épaisseur et de 150 $\mu$m de diamètre. L'homme du métier saura aisément trouver dans la littérature tous les détails nécessaires à la réalisation d'une telle source élémentaire. On utilise plus souvent le terme anglais pour désigner une telle source « *micro-hotplate IR-source ».* On peut également utiliser le terme « *micro-filament ».*

De la même façon, chaque détecteur élémentaire $251_i$ est avantageusement un bolomètre infrarouge basé sur une technologie de type MEMS. Le détecteur élémentaire $251_i$ comprend une membrane $551_i$ absorbant la chaleur. Un rayonnement infrarouge incident sur la membrane $551_i$ échauffe cette dernière. La chaleur absorbée par la membrane $551_i$ est convertie en signal électrique, ce qui permet de quantifier l'intensité lumineuse du rayonnement infrarouge incident. La membrane $551_i$ est par exemple une membrane en oxyde de vanadium présentant une surface carrée de 28 $\mu$m de côté et une épaisseur de 1 $\mu$m. Elle peut être surmontée par un empilement précis de couches supplémentaires, par exemple un empilement de Si (300nm), YSZ (40 nm), $CeO_2$ (10 nm), GBCO (50 nm) et $PtO_x$ (200 nm). L'homme du métier saura aisément trouver dans la littérature tous les détails nécessaires à la réalisation d'un tel détecteur élémentaire. En variante, chaque détecteur élémentaire $251_i$ peut être une thermopile ou un pyromètre, réalisé également selon une technologie MEMS.

Les sources élémentaires $210_i$ et les détecteurs élémentaires $251_i$ sont ensuite déposés et collés dans un même plan, sur le substrat 231, et du côté opposé aux optiques réfractives. Le dépôt met en oeuvre une technique connue dite « *pick and place ».* L'ensemble est ensuite collé sur une plaque de circuit imprimé 54. La plaque de circuit imprimé 54 est notamment un PCB (pour l'anglais « *Printed Board Circuit »),* et plus particulièrement un ASIC (pour l'anglais *« Application-Specific Integrated Circuit »).* Chaque source élémentaire $210_i$ est alimentée électriquement par un fil de connexion $55_i$, et chaque détecteur élémentaire $251_i$ est relié au circuit imprimé 54 par un fil de connexion $56_i$. Le câblage à l'aide des fils de connexion $55_i$ et $56_i$ peut être réalisé par une technique dite de « *wire bonding ».* En particulier, le câblage peut être réalisé par une connexion dite de « *ball bonding ».* Alternativement, le câblage peut être réalisé par une connexion dite de TSV (pour l'anglais « *Through Silicon Vias »).*

Un boîtier, ouvert en l'une de ses faces, est ensuite collé sur le circuit imprimé 54 pour former, entre l'intérieur de ce boîtier et le circuit imprimé 54, la cavité 270 du capteur de gaz selon l'invention. Les surfaces réfléchissantes de retour sont réalisées à l'intérieur du boîtier. Les surfaces réfléchissantes de retour sont des miroirs plans, c'est pourquoi le collage du boîtier ne nécessite pas d'alignement précis. On pourra envisager différentes variantes pour réaliser les surfaces réfléchissantes de retour, sans sortir du cadre de la présente invention. Par exemple, le fond du boîtier peut recevoir un unique miroir plan, ou plusieurs miroirs distincts éventuellement inclinés différemment les uns par rapport aux autres, ou un unique miroir structuré de façon à former plusieurs surfaces réfléchissantes inclinées différemment les unes par rapport aux autres.

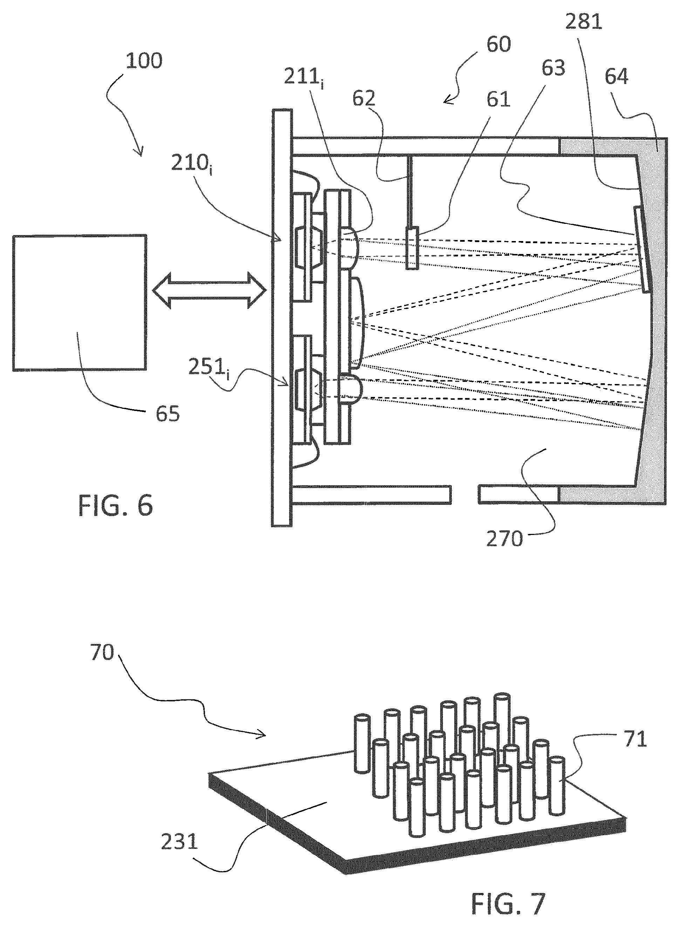

La figure 6 illustre un sixième mode de réalisation de capteur de gaz 60 selon l'invention.

Le capteur de gaz 60 ne sera décrit que pour ses différences relativement au capteur de gaz 50 de la figure 5.

Le capteur de gaz 60 comprend un filtre optique 61 disposé sur le trajet optique du faisceau lumineux, en sortie de l'objectif élémentaire $211_i$. Il remplace les filtres optiques élémentaires $52_i$ tels que décrits en référence à la figure 5. Un avantage est que le filtre optique 61 est alors disposé là où le faisceau lumineux est en incidence quasi-normale, ce qui améliore son efficacité.

Le filtre optique 61 présente par exemple une surface de 2x10 mm$^2$ : il s'étend en sortie de l'ensemble des objectifs élémentaires $211_i$. Le filtre optique 61 est maintenu par un support 62. En variante, on peut envisager de placer le filtre optique 61 sur une surface réfléchissante de retour ou sous une lentille de relais. L'alignement du filtre optique relativement aux autres éléments du capteur de gaz 60 n'a pas besoin d'être précis, c'est pourquoi il peut être réalisé à la main.

Le capteur de gaz 60 comprend en outre un pré-concentrateur de gaz 63, nommé aussi « absorbeur à gaz ». Un pré-concentrateur est un dispositif qui va concentrer en son sein une grande quantité du gaz présent dans la cavité 270. Ainsi, en plaçant un pré-concentrateur sur le chemin optique du faisceau lumineux à l'intérieur de la cavité 270, on s'assure que ledit faisceau lumineux croise un maximum des molécules dudit gaz présentes dans la cavité. Le faisceau lumineux à l'intérieur de la cavité traverse le pré-concentrateur 63, est réfléchi sur la surface réfléchissante de retour 281, puis traverse de nouveau le pré-concentrateur 63. L'absorption par le gaz est donc maximale. En d'autres termes, un préconcentrateur permet que le gaz à mesurer soit plus présent sur le chemin optique du faisceau lumineux à l'intérieur de la cavité 270. Ainsi, on peut détecter la présence d'un gaz, et déterminer sa concentration dans la cavité, pour une longueur réduite dudit chemin optique. Le capteur de gaz 60 ainsi réalisé est également adapté pour mesurer des faibles concentrations d'un gaz, ou pour effectuer des mesures sur un gaz présentant une faible section efficace d'absorption.

Dans l'exemple représenté en figure 6, le capteur de gaz 60 fait partie d'un éthylomètre 100, mais on pourra envisager de nombreux autres appareils pouvant inclure un tel capteur de gaz, par exemple des capteurs de composé organique volatile tels que le formaldéhyde. Le pré-concentrateur 63 de la figure 6 permet donc de concentrer l'éthanol, mais on pourra envisager des pré-concentrateurs pour concentrer le formaldéhyde ou un autre composé organique volatile.

Le pré-concentrateur 63 est placé sur une des surfaces réfléchissantes de retour. Selon une variante non représentée, chaque surface réfléchissante de retour est recouverte par le pré-concentrateur ou par un pré-concentrateur dédié. Dans l'exemple représenté sur la figure 6, le pré-concentrateur 63 est placé sur la surface réfléchissante de retour 281.

Un inconvénient d'un pré-concentrateur est qu'il ne libère pas le gaz une fois que ce dernier a été absorbé. On voit donc qu'il est nécessaire de remplacer le pré-concentrateur après chaque mesure réalisée à l'aide du capteur de gaz 60.

Le capteur de gaz 60 présente un capot amovible 64, recevant les surfaces réfléchissantes de retour et le pré-concentrateur 63. Ainsi, après chaque utilisation de l'éthylomètre 100, on peut facilement remplacer le pré-concentrateur 63. Comme précisé ci-avant, les surfaces réfléchissantes de retour ne nécessitent pas un alignement précis relativement aux autres éléments du capteur de gaz 60. On peut donc envisager d'enlever et de remettre le capot amovible 64, à la main, sans détériorer les performances du capteur de gaz 60. On réalise ainsi un capteur de gaz compact, précis et peu onéreux.

Le capteur de gaz 60 est relié à un module de mesure et d'alimentation 65. Le module de mesure et d'alimentation comprend notamment des moyens de calcul pour mesurer une concentration en éthanol dans l'air dans la cavité 270, mettant en oeuvre un calcul d'un rapport entre l'intensité lumineuse reçue par le détecteur et l'intensité lumineuse émise par la source lumineuse.

Le module de mesure et d'alimentation 65 peut comprendre des moyens électroniques et des moyens informatiques et/ou logiciels. Il s'agit typiquement d'un circuit électronique numérique ou analogique, de préférence dédié, associé à un microprocesseur et/ou un ordinateur.

On a représenté en figure 7 un réseau formant une lentille sub-longueur d'onde 70, qui peut être utilisée comme objectif, oculaire et/ou lentille de relais, dans un capteur de gaz selon l'invention. En d'autres termes, au moins l'une de ces optiques réfractives peut être formée par une lentille sub-longueur d'onde 70, également nommée réseau sub-longueur d'onde, ou lentille sub-lambda.

La lentille sub-longueur d'onde 70 est formée de nanostructures de dimensions nanométriques, par exemple des plots 71. Les plots peuvent être disposés en matrice carré, en nid d'abeille, ces deux exemples n'étant pas limitatifs. En variante, ces nanostructures peuvent être des trous, des raies, ou tout autre motif. Il peut également s'agir de cercle concentrique dont le pas est inférieur à la longueur d'onde et dont le centre correspond à l'axe optique de la lentille sub-longueur d'onde 70. Cet axe optique est alors avantageusement confondu avec l'axe optique de la source lumineuse (ou d'une source lumineuse élémentaire), correspondant à l'axe optique du détecteur (ou d'un détecteur élémentaire correspondant).

La dimension caractéristique de ces nanostructures est bien inférieure à la longueur d'onde du faisceau lumineux émis par la source lumineuse. Par exemple, ces nanostructures sont des plots dont la section est bien inférieure à ladite longueur d'onde.

Par exemple, le faisceau lumineux incident présente une longueur d'onde comprise entre 2 $\mu$m et 10 $\mu$m, et la section d'un plot est de l'ordre de 400 nm. La hauteur d'un plot est comprise entre 4 $\mu$m et 10 $\mu$m. La densité des plots varie entre le centre de la lentille sub-longueur d'onde et les bords de la lentille sub-longueur d'onde. Ainsi, à l'échelle de la longueur d'onde du faisceau lumineux incident, la lentille sub-longueur d'onde 70 présente un gradient d'indice et agit comme une optique réfractive.

La lentille sub-longueur d'onde 70 est avantageusement gravée dans une couche de silicium. De préférence, on utilise une couche de silicium préexistante du capteur de gaz, pour y graver une lentille sub-longueur d'onde formant une optique réfractive.

Selon une première variante, la lentille sub-longueur d'onde 70 est gravée sur la face du substrat en silicium 231 opposée à la face recevant la source et le détecteur. De préférence, seuls l'objectif et l'oculaire sont réalisés par une lentille sub-longueur d'onde.

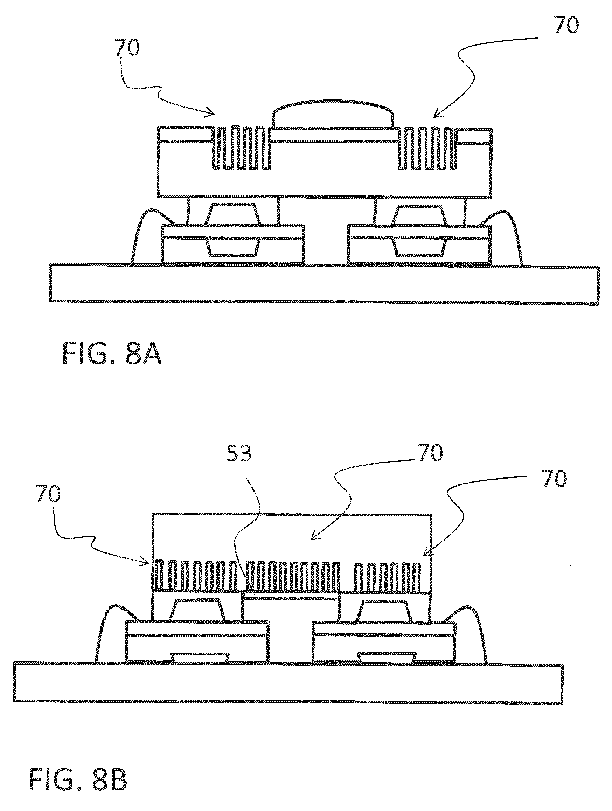

La figure 8A illustre un exemple de cette première variante. La figure 8A représente un détail de la figure 6, et diffère de la figure 6 en ce que les objectifs élémentaires et oculaires élémentaires sont formés chacun par une lentille sub-longueur d'onde 70 gravée sur la face du substrat en silicium opposée à la face recevant la source et le détecteur.

Selon une deuxième variante, la lentille sub-longueur d'onde 70 est gravée sur la face du substrat en silicium recevant la source et le détecteur. La figure 8B illustre un exemple de cette deuxième variante. Dans l'exemple représenté en figure 8B, l'objectif, l'oculaire et la lentille de relais sont réalisés par une lentille sub-longueur d'onde. La figure 8B représente un détail de la figure 6, et diffère de la figure 6 en ce que les objectifs élémentaires, oculaires élémentaires et lentilles de relais élémentaires sont formés chacun par une lentille sub-longueur d'onde 70 gravée sur la face du substrat en silicium recevant la source et le détecteur. La couche en matériau réfléchissant 53 se trouve sous la lentille de relais, donc cette fois du côté du substrat recevant la source et le détecteur.

Selon une troisième variante, la lentille sub-longueur d'onde 70 est gravée sur une face inférieure ou supérieure du chapeau protégeant la source lumineuse ou le détecteur (voir description en référence à la figure 5).

Un avantage d'une telle lentille sub-longueur d'onde 70 est qu'elle permet de diminuer encore l'encombrement d'un capteur de gaz selon l'invention, puisqu'au moins certaines des optiques réfractives font partie intégrante du substrat en silicium ou d'un chapeau en silicium appartenant à la source ou au détecteur.

L'invention n'est pas limitée aux exemples qui viennent d'être décrits, et on pourra envisager de nombreuses variantes sans sortir du cadre de la présente invention , qui est définie par les revendications En particulier, d'autres exemples de sources ou de détecteurs pourront être mis en oeuvre, notamment des sources et détecteurs adaptés à être montés sur un substrat et selon une technologie dite « wafer-level packaging ».

## Revendications

1. Capteur de gaz (20; 30; 50; 60) comprenant une cavité (270) pour recevoir un gaz, une source lumineuse (210) et un détecteur (251), 2. et comprenant en outre:

   - un substrat (231) ;
   - un objectif (211) situé sur le substrat (231), adapté à collecter un faisceau lumineux (212, 213) émis par la source lumineuse (210) ;
   - un oculaire (250) situé sur le substrat (231), adapté à collecter un faisceau lumineux incident pour le focaliser sur le détecteur (251) ;
   - des surfaces réfléchissantes dites de retour (281, 282), situées en face dudit substrat ; et
   - au moins une lentille de relais (221 ; 321, 322), disposée sur une surface réfléchissante dite intermédiaire (222) formée sur le substrat (231), et comprenant au moins une lentille de champ (221; 321) adaptée à dévier des rayons (213) du faisceau lumineux émis par la source lumineuse, pour les rapprocher de l'axe optique de l'oculaire (250) ;

   l'objectif (211), l'oculaire (250), la lentille de relais (221; 321, 322), la surface réfléchissante intermédiaire (222), et les surfaces réfléchissantes de retour (281, 282) formant ensemble un système optique agencé de sorte que le faisceau lumineux (212, 213) émis par la source lumineuse (210) se propage par réflexions successives de l'objectif (211) à l'oculaire (250) en passant par la lentille de relais (221 ; 321, 322).

2. Capteur de gaz (20; 30; 50; 60) selon la revendication 1, **caractérisé en ce que** la source lumineuse (210) et le détecteur (251) sont disposés sur une première face du substrat (231), opposée à une seconde face du substrat (231) sur laquelle sont disposés l'objectif (211), l'oculaire (250), et la lentille de relais (221 ; 321, 322).

3. Capteur de gaz (20; 30; 50; 60) selon la revendication 1 ou 2, **caractérisé en ce que** la lentille de champ (221; 321) est une lentille plan concave, une face plane de la lentille de champ étant disposée sur la surface réfléchissante intermédiaire (222) et en un foyer intermédiaire du système optique.

4. Capteur de gaz (30) selon l'une quelconque des revendications 1 à 3, **caractérisé en ce que** la lentille de relais comprend au moins une lentille intermédiaire (322) intercalée entre deux lentilles de champ (322), de sorte que le faisceau lumineux (212, 213) émis par la source lumineuse (210) se propage par réflexions successives de l'objectif (211) à l'oculaire (250) en passant par les lentilles de champ (321) et la lentille intermédiaire (322).

5. Capteur de gaz (20; 30; 50; 60) selon l'une quelconque des revendications 1 à 4, **caractérisé en ce qu'**au moins un élément optique parmi la lentille de relais (221 ; 321, 322), l'objectif (211), et l'oculaire (250), est constitué d'une lentille sub-longueur d'onde (70).

6. Capteur de gaz (50 ; 60) selon l'une quelconque des revendications 1 à 5, **caractérisé en ce que** :

- la source lumineuse comprend une pluralité de sources élémentaires (210$_i$) ;
- l'objectif comprend une pluralité d'objectifs élémentaires (211$\mu$; 211A$_i$, 211B$_i$), adaptés chacun à collecter un faisceau lumineux émis par une source élémentaire (210$_i$) ;
- l'oculaire comprend une pluralité d'oculaires élémentaires (250$_i$) adaptés chacun à collecter un faisceau lumineux incident pour le focaliser sur le détecteur; et
- la lentille de relais comprend une pluralité de lentilles de relais élémentaires (212$_i$ ; 321$_i$, 322$_i$ ; 321A$_i$, 321B$_i$, 322A$_i$, 322B$_i$).

7. Capteur de gaz (50 ; 60) selon l'une quelconque des revendications 1 à 6, **caractérisé en ce que** la source lumineuse comprend une pluralité de sources élémentaires (210$_i$) alignées sur une même droite (41).

8. Capteur de gaz (50 ; 60) selon l'une quelconque des revendications 1 à 6, **caractérisé en ce que** la source lumineuse comprend une pluralité de sources élémentaires (210$_i$) réparties de part et d'autre du détecteur et alignées selon deux droites parallèles (41A, 41B).

9. Capteur de gaz (50 ; 60) selon l'une quelconque des revendications 1 à 6, **caractérisé en ce que** la source lumineuse comprend une pluralité de sources élémentaires (210$_i$) réparties sur un cercle (45) centré sur le détecteur.

10. Capteur de gaz (50 ; 60) selon l'une quelconque des revendications 6 à 9, **caractérisé en ce qu'**au moins une des surfaces réfléchissantes de retour (281, 282) est inclinée relativement au plan du détecteur, de sorte que des faisceaux lumineux émis par les sources élémentaires (210$_i$) soient focalisés en un même point sur le détecteur.

11. Capteur de gaz (60) selon l'une quelconque des revendications 1 à 10, **caractérisé par** un pré-concentrateur de gaz (63) disposé sur une surface réfléchissante de retour (281 ; 282).

12. Capteur de gaz (20 ; 30 ; 50 ; 60) selon la revendication 11, **caractérisé en ce qu'**il comprend un capot (64) recevant la surface réfléchissante de retour et le pré-concentrateur de gaz (63), le capot (64) étant réalisé amovible relativement au substrat (231).

13. Capteur de gaz (20; 30; 50; 60) selon l'une quelconque des revendications 1 à 12, **caractérisé en ce que** la source lumineuse (210 ; 210$_i$) est une source infrarouge micro-électronique, comportant une membrane résistive (510$_i$) formant un émetteur thermique.

14. Capteur de gaz (20 ; 30 ; 50 ; 60) selon l'une quelconque des revendications 1 à 13, **caractérisé en ce que** le détecteur (251 ; 251$_i$) est un bolomètre micro-électronique, comportant une membrane absorbante (551$_i$) formant un absorbant thermique.

15. Ethylomètre (100) comprenant un capteur de gaz adapté à recevoir un gaz expiré par un utilisateur, **caractérisé en ce que** le capteur de gaz est un capteur de gaz (20 ; 30 ; 50 ; 60) selon l'une quelconque des revendications 1 à 14.

**Patentansprüche**

1. Gas-Sensor (20 ; 30 ; 50 ; 60), umfassend einen Hohlraum (270) zur Aufnahme eines Gases, eine Lichtquelle (210) und einen Detektor (251), und außerdem umfassend :

   - ein Substrat (231) ;
   - ein Objektiv (211), angeordnet auf dem Substrat (231), das dazu angeordnet ist, um ein durch die Lichtquelle (210) abgestrahltes Lichtbündel (212, 213) zu sammeln ;
   - ein Okular (250), angeordnet auf dem Substrat (231), das dazu angeordnet ist, um ein einfallendes Lichtbündel zu sammeln, um es auf den Detektor (251) zu fokussieren ;
   - sogenannte Rückreflexionsflächen (281, 282), dem genannten Substrat gegenüber angeordnet; und
   - wenigstens eine Relaislinse (221 ; 321, 322), angeordnet auf einer sogenannten Zwischenreflexionsfläche (222), die auf dem Substrat (231) ausgebildet ist, und wenigstens eine Feldlinse (221 ; 321) umfassend, angepasst um Strahlen (213) des durch die Lichtquelle abgestrahlten Lichtbündels umzulenken, um sie der optischen Achse des Okulars (250) anzunähern ; wobei das Objektiv (211), das Okular (250), die Relaislinse (221 ; 321 ; 322), die Zwischenreflexionsfläche (222) und die Rückreflexionsflächen (281, 282) zusammen ein optisches System bilden, das so angeordnet ist, dass das durch die Lichtquelle (210) abgestrahlte Lichtbündel sich durch sukzessive Reflexionen vom Objektiv (211) zum Okular (250) ausbreitet, wobei es die Relaislinse (221 ; 321, 322) durchläuft.

2. Gas-Sensor (20 ; 30 ; 50 ; 60) nach Anspruch 1, **dadurch gekennzeichnet, dass** die Lichtquelle (210) und der Detektor (251) auf einer ersten Seite des Substrats (231) angeordnet sind, einer zweiten Seite des Substrats (231) entgegengesetzt, auf welcher das Objektiv (211), das Okular (250) und die Relaislinse (221 ; 321, 322) angeordnet sind.

**3.** Gas-Sensor (20 ; 30 ; 50 ; 60) nach Anspruch 1 oder 2, **dadurch gekennzeichnet, dass** die Feldlinse (221 ; 321) eine Plankonkavlinse ist, wobei eine plane Fläche der Feldlinse auf der Zwischenreflexionsfläche (222) und in einem Zwischenbrennpunkt des optischen Systems angeordnet ist.

**4.** Gas-Sensor (30) nach einem der Ansprüche 1 bis 3, **dadurch gekennzeichnet, dass** die Relaislinse wenigstens eine Zwischenlinse (322) umfasst, eingefügt zwischen zwei Feldlinsen (322), so dass das durch die Lichtquelle (210) abgestrahlte Lichtbündel (212, 213) sich durch sukzessive Reflexionen vom Objektiv (211) zum Okular (250) ausbreitet, wobei es die Feldlinsen (321) und die Zwischenlinse (322) durchläuft.

**5.** Gas-Sensor (20 ; 30 ; 50 ; 60) nach einem der Ansprüche 1 bis 4, **dadurch gekennzeichnet, dass** wenigstens eines optische Element unten der Relaislinse (221 ; 321, 322), dem Objektiv (211) und dem Okular (250), durch eine Sublambda-Linse (70) gebildet wird.

**6.** Gas-Sensor (50 ; 60) nach einem der Ansprüche 1 bis 5, **dadurch gekennzeichnet dass**:

- die Lichtquelle eine Vielzahl von elementaren Quellen $(210_i)$ umfasst ;
- das Objektiv eine Vielzahl von elementaren Objektiven $(211_i; 211A_i; 211B_i)$ umfasst, jedes angepasst, um ein durch eine elementare Lichtquelle $(210_i)$ abgestrahltes Lichtbündel zu sammeln ;
- das Okular eine Vielzahl von elementaren Okularen $(250_i)$ umfasst, jedes angepasst, um ein einfallendes Lichtbündel zu sammeln, um es auf den Detektor zu fokussieren; und
- die Relaislinse eine Vielzahl von elementaren Relaislinsen umfasst $(212_i ; 321_i, 322_i ; 321A_i, 321B_i, 322A_i, 322B_i)$.

**7.** Gas-Sensor (50 ; 60) nach einem der Ansprüche 1 bis 6, **dadurch gekennzeichnet, dass** die Lichtquelle eine Vielzahl von elementaren Quellen $(210_i)$ umfasst, aneinandergereiht auf einer selben Geraden (41).

**8.** Gas-Sensor (50 ; 60) nach einem der Ansprüche 1 bis 6, **dadurch gekennzeichnet, dass** die Lichtquelle eine Vielzahl von elementaren Quellen $(210_i)$ umfasst, verteilt auf beide Seiten des Detektors und aneinandergereiht auf zwei parallelen Geraden (41 A, 41 B).

**9.** Gas-Sensor (50 ; 60) nach einem der Ansprüche 1 bis 6, **dadurch gekennzeichnet, dass** die Lichtquelle eine Vielzahl von elementaren Quellen $(210_i)$ umfasst, verteilt auf einem auf den Detektor zentrierten Kreis (45).

**10.** Gas-Sensor (50 ; 60) nach einem der Ansprüche 6 bis 9, **dadurch gekennzeichnet, dass** wenigstens eine der Rückreflexionsflächen (281, 282) so zur Ebene des Detektors geneigt ist, dass die durch die elementaren Lichtquellen $(210_i)$ abgestrahlten Lichtbündel auf ein und denselben Punkt des Detektors fokussiert sind.

**11.** Gas-Sensor (60) nach einem der Ansprüche 1 bis 10, **gekennzeichnet durch** einen Gas-Vorkonzentrator (63), angeordnet auf einer Rückreflexionsfläche (281 ; 282).

**12.** Gas-Sensor (20 ; 30 ; 50 ; 60) nach Anspruch 11, **dadurch gekennzeichnet, dass** er eine die Rückreflexionsfläche und den Gas-Vorkonzentrator (63) enthaltende Haube (64) umfasst, wobei die Haube (64) in Bezug auf das Substrat (231) abnehmbar ausgeführt ist.

**13.** Gas-Sensor (20 ; 30 ; 50 ; 60) nach einem der Ansprüche 1 bis 12, **dadurch gekennzeichnet, dass** die Lichtquelle $(210 ; 210_i)$ eine mikroelektronische Infrarotquelle ist, die eine resistive Membran $(510_i)$ umfasst, welche eine Wärmequelle bildet.

**14.** Gas-Sensor (20 ; 30 ; 50 ; 60) nach einem der Ansprüche 1 bis 13, **dadurch gekennzeichnet, dass** der Detektor $(251 ; 251_i)$ ein mikroelektronisches Bolometer ist, das eine absorbierende Membran $(551_i)$ umfasst, die einen thermischen Absorber bildet.

**15.** Atemalkoholbestimmung (100), einen Gas-Sensor umfassend, welcher an das Aufnehmen eines von einem Benutzer ausgeatmeten Gases angepasst ist, **dadurch gekennzeichnet, dass** der Gas-Sensor ein Gas-Sensor (20 ; 30 ; 50 ; 60) nach einem der Ansprüche 1 bis 14 ist.

**Claims**

**1.** Gas sensor (20; 30; 50; 60) comprising a cavity (270) for receiving a gas, a light source (210) and a detector (251), and further comprising:

- a substrate (231);
- an objective (211) situated on the substrate (231), adapted to collect a light beam (212, 213) emitted by the light source (210);
- an eyepiece (250) situated on the substrate (231), adapted to collect an incident light beam to focus it on the detector (251);
- reflective surfaces known as return surfaces (281, 282), situated facing said substrate; and

- at least one relay lens (221; 321, 322), arranged on a reflective surface known as intermediate surface (222) formed on the substrate (231), and comprising at least one field lens (221; 321) adapted to deviate the rays (213) of the light beam emitted by the light source, to bring them closer to the optical axis of the eyepiece (250);

the objective (211), the eyepiece (250), the relay lens (221; 321, 322), the intermediate reflective surface (222), and the return reflective surfaces (281, 282) together forming an optical system laid out such that the light beam (212, 213) emitted by the light source (210) propagates by successive reflections from the objective (211) to the eyepiece (250) while passing through the relay lens (221; 321, 322).

2. Gas sensor (20; 30; 50; 60) according to claim 1, **characterised in that** the light source (210) and the detector (251) are arranged on a first face of the substrate (231), opposite a second face of the substrate (231) on which are arranged the objective (211), the eyepiece (250), and the relay lens (221; 321, 322).

3. Gas sensor (20; 30; 50; 60) according to claim 1 or 2, **characterised in that** the field lens (221; 321) is a flat concave lens, one flat face of the field lens being arranged on the intermediate reflective surface (222) and in an intermediate focus of the optical system.

4. Gas sensor (30) according to any one of claims 1 to 3, **characterised in that** the relay lens comprises at least one intermediate lens (322) intercalated between two field lenses (322), such that the light beam (212, 213) emitted by the light source (210) propagates by successive reflections from the objective (211) to the eyepiece (250) while passing through the field lenses (321) and the intermediate lens (322).

5. Gas sensor (20; 30; 50; 60) according to any one of claims 1 to 4, **characterised in that** at least one optical element among the relay lens (221; 321, 322), the objective (211), and the eyepiece (250), is constituted of a sub-wavelength lens (70).

6. Gas sensor (50; 60) according to any one of claims 1 to 5, **characterised in that**:

   - the light source comprises a plurality of elementary sources ($210_i$);
   - the objective comprises a plurality of elementary objectives ($211_i$; $211A_i$, $211B_i$), each adapted to collect a light beam emitted by an elementary source ($210_i$);
   - the eyepiece comprises a plurality of elementary eyepieces ($250_i$) each adapted to collect an incident light beam to focus it on the detector; and
   - the relay lens comprises a plurality of intermediate relay lenses ($212_i$; $321_i$, $322_i$; $321A_i$, $321B_i$, $322A_i$, $322B_i$).

7. Gas sensor (50; 60) according to any one of claims 1 to 6, **characterised in that** the light source comprises a plurality of elementary sources ($210_i$) aligned on a same straight line (41).

8. Gas sensor (50; 60) according to any one of claims 1 to 6, **characterised in that** the light source comprises a plurality of elementary sources ($210_i$) spread out on either side of the detector and aligned along two parallel straight lines (41A, 41B).

9. Gas sensor (50; 60) according to any one of claims 1 to 6, **characterised in that** the light source comprises a plurality of elementary sources ($210_i$) spread out on a circle (45) centred on the detector.

10. Gas sensor (50; 60) according to any one of claims 6 to 9, **characterised in that** at least one of the return reflective surfaces (281, 282) is inclined relative to the plane of the detector, such that the light beams emitted by the elementary sources ($210_i$) are focused on a same point on the detector.

11. Gas sensor (60) according to any one of claims 1 to 10, **characterised by** a gas pre-concentrator (63) arranged on a return reflective surface (281; 282).

12. Gas sensor (20; 30; 50; 60) according to claim 11, **characterised in that** it comprises a lid (64) receiving the return reflective surface and the gas pre-concentrator (63), the lid (64) being made removable relative to the substrate (231).

13. Gas sensor (20; 30; 50; 60) according to any one of claims 1 to 12, **characterised in that** the light source (210; $210_i$) is a micro-electronic infrared source, comprising a resistive membrane ($510_i$) forming a thermal emitter.

14. Gas sensor (20; 30; 50; 60) according to any one of claims 1 to 13, **characterised in that** the detector (251; $251_i$) is a micro-electronic bolometer, comprising an absorbent membrane ($551_i$) forming a thermal absorbent.

15. Ethylometer (100) comprising a gas sensor adapted to receive a gas exhaled by a user, **characterised in that** the gas sensor is a gas sensor (20; 30; 50; 60) according to any one of claims 1 to 14.

FIG. 1

FIG. 2

FIG. 3A

FIG. 3B

FIG. 4A

FIG. 4B

FIG. 4C

FIG. 4D

FIG. 5

FIG. 6

FIG. 7

FIG. 8A

FIG. 8B

## RÉFÉRENCES CITÉES DANS LA DESCRIPTION

**Documents brevets cités dans la description**

- US 20030136911 A
- WO 2011151629 A